# EUROPEAN PATENT APPLICATION

(11) **EP 1 829 450 A1**
(43) Date of publication of application: **05.09.2007**
(21) Application number: 07103238.7
(22) Date of filing: 28.02.2007
(51) Int. Cl.: A21D 2/18, A21D 13/00, A21D 6/00, A21D 15/02, A21D 17/00

(54) **High moisture, high fiber baked products and doughs thereof, and methods**

(30) Priority: 01.03.2006 US 364167
(71) Applicant: KRAFT FOODS HOLDINGS, INC., Northfield, Illinois 60093 (US)
(72) Inventor: Hansen, Timothy S., LaGrange, IL 60525 (US); Tangprasertchai, Uraiwan, Inverness, IL 60010 (US); Gray, Jonathan A., Mundelein, IL 60060 (US)
(74) Representative: Smaggasgale, Gillian Helen

(57) **Abstract**

A high moisture, high fiber baked product is provided comprising a high moisture baked component, such as a bread component, comprising a crystalline polysaccharide of a type and amount effective to increase total dietary fiber content retention and reduce firmness as determined by penetration and compression force, of the high moisture baked component as compared to a similar baked product lacking the crystalline polysaccharide. Improved moisture retention can also be obtained. Bread doughs containing the selected crystalline polysaccharide materials and methods of making food products incorporating the dough are also provided.

## Description

### Field of the Invention

This invention generally relates to high moisture, high fiber baked products, and doughs used in making them. This invention also relates to reduced-calorie versions of the high moisture, high fiber baked products. This invention additionally relates to methods of preparing the high moisture, high fiber baked products and doughs.

### Background of the Invention

There is an ever increasing demand and market for topped or filled baked goods in the food industry that can be rapidly cooked for service in place of their traditional counterparts made with freshly-prepared dough.

Additionally, as the health and wellness food markets continue to grow, rapid-cooking topped or filled baked goods also are desired which have been implemented in specialized high fiber, reduced calorie and/or low fat dough formulations having functional and sensory properties comparable to standard dough formulations. The benefits of fiber and soluble fiber are well known in improving health and promoting physiological properties. Research suggests that fiber may help reduce the risk of some diseases and provide health advantages. Purported health benefits of fiber include: digestive tract health; regularity (laxation/intestinal motility/reduced constipation; reduced diarrhea; reduced or management of certain gastrointestinal diseases; beneficial effects on composition and metabolic activity of gut bacteria; reduced blood lipids (lowered cholesterol); modulation of blood glucose response (regulation of blood sugar levels); reduced risk of heart disease, some cancers, and diabetes; aiding in weight control; mineral absorption enhancement; and immunity enhancement. Foods which offer reduced caloric, net carbohydrate, and/or fat content per serving are also in increasing demand. The term "net carbohydrate" refers to those carbohydrates that are digestible, and is generally not inclusive of indigestible or poorly digestible carbohydrates such as fiber, resistant starch, resistant maltodextrins, sugar alcohols, and the like. Previous efforts to implement higher fiber, reduced-calorie formats in high moisture doughs, such as bread doughs, have encountered technical challenges and problems, especially with regard to texture. In particular, it previously has been difficult to control moisture loss in such specialized dough formulations, resulting in poorly textured products, such as overly firm, hard and tough baked components and products.

Another challenge in implementing such specialized dough formulations for health and wellness baked goods, as well as standard baked goods, has been the demand for food products requiring substantially reduced preparation time, labor and skill without sacrificing product quality.

Fresh dough preparation is time-consuming and labor-intensive. Also, conventional freshly-prepared doughs have limited shelf stability and may deteriorate within a relatively short period of time. Alternatives which eliminate the need for freshly prepared dough for baked goods have been sought for commercial food service and home cooking applications. Those alternatives providing greater cooking ease while providing dough quality comparable to that of freshly-prepared dough have been particularly sought after.

Frozen pizzas, for instance, have been marketed for a number of years for retail, commercial food service, and home markets. An ongoing challenge in the food industry has been to develop frozen pizzas that are similar in quality to freshly-made pizzas from scratch which otherwise contain the same components and ingredients. In the past, the dough (crust) component of frozen pizza products has presented significant technical challenges. Ideally the dough portion of a baked frozen pizza should have a structure and texture comparable to that of a pizza made with freshly-prepared dough. However, despite considerable prior research and development, further improvements in frozen pizza crusts have been needed.

One of the popular processes for providing factory pre-made pizzas has been manufacture of partially-baked, i.e., par-baked, crusts in large volume, wherein the crusts are refrigerated and then at a later date or time can be topped with various ingredients when convenient. Partially-baked dinner rolls, various sweet rolls, and bread loaves also have become popular retail food items. In conventional par-baking practice, a standard dough often is divided into the desired size and partially baked under controlled conditions of temperature and baking time so as to substantially cook the dough while avoiding browning and formation of a significant crust on the outer surface. More particularly, the baking conditions are adjusted so as to substantially gelatinize starch granules and at least partial liberate carbon dioxide by yeast action and to then arrest the yeast action. The partially-baked product then has sufficient rigidity to withstand removal from the oven and subsequent handling and packaging without collapsing. In addition, the partially-baked product has a relatively higher moisture content compared to a fully baked product. The consumer prepares the product for eating by a final baking step during which the desired crust and browning of the same is obtained and during which the moisture content is reduced to that of a freshly-baked item.

However, the use of par-baked dough or other multi-step cooked dough materials for topped or filled baked goods pose additional challenges compounding those already encountered with raw doughs, and further complicate efforts to provide dough quality comparable to freshly-prepared dough. When a pizza dough is cooked by itself (i.e., par-baked without toppings), more heat typically is driven into the top of the dough than would be the case if the dough were cooked with topping present, thus allowing more moisture (i.e., water vapor) to escape through the top of the dough than would be the case if the dough were cooked with topping present. Typically, at least some portion of a typical pizza topping is of low moisture vapor permeability and thereby acts as a barrier to the escape of moisture vapor driven from the top of the pizza by the cooking procedure. The result in prior par-baked crusts typically has been a drier, tougher dough product.

Ideally, a finished pizza or other topped or filled baked good made with par-baked or other non-freshly prepared dough would have a spongy, moist, soft crumb and crispy lightly browned, but not hard or tough, exterior crust surface. As will become apparent from the descriptions that follow, the invention addresses this need as well as providing other advantages and benefits.

### Summary of the Invention

The invention provides high moisture, high fiber baked products having soft texture and non-gritty mouthfeel through incorporation of selected crystalline polysaccharide additives in dough used in making them. The invention also relates to the modified doughs and methods for using them in preparing the improved baked products.

For purposes herein, the term "baked product" generally refers to a topped or filled composite food product including a high moisture, high fiber baked component (e.g., a high moisture, high fiber bread component), or alternatively a high moisture, high fiber baked product by itself (e.g., a high moisture, high fiber bread product). The "bread component" and/or "bread product" may be raw dough, or a fully-baked or par-baked good made with leavened dough in which the par-baked or baked good has a soft bread-like open cell interior structural portion and bready flavor (e.g., fresh-baked flavor), and the exterior crust surface may be browned and/or crispy but not hard or tough.

Improvements in fiber retention provided by embodiments of the present invention are generally applicable to any baked product made with high moisture dough that can incorporate the selected crystalline polysaccharide additives. Improved moisture retention also may be obtained in embodiments of the present invention. For purposes herein, the terms "high moisture baked product", "high moisture (high fiber) baked product", "high moisture baked component", and "moist cake", in their singular or plural forms, refer to a baked good having a relative vapor pressure ("water activity," A_{w}) of greater than 0.72, particularly greater than 0.75, and more particularly greater than 0.80. "High moisture dough" refers to a dough containing sufficient total water, taken into account all sources of moisture including separately added water, to provide a raw dough containing at least about 20 wt% moisture, particularly at least about 25% moisture, more particularly at least about 30 wt% moisture, even more particularly at least about 35 wt%, and most particularly at least about 45 wt% moisture. In a particular embodiment, the high moisture dough is high gluten content dough, such as bread dough. For purposes herein, "high gluten" refers to gluten protein content of at least about 4 wt% gluten, based on total content of gluten and its glutenin and gliadin protein precursors, including those native to the flour or supplemented, e.g., via addition of vital wheat gluten or protein fractions thereof. In another particular embodiment, reduced-calorie or reduced-fat baked products incorporating the selected crystalline polysaccharide additives can be prepared which provide softer baked texture after microwave or other oven baking as compared to baked products made without the crystalline polysaccharide additives defined herein. Among other benefits, it has been found that the addition of the selected crystalline polysaccharides in effective amounts in high moisture dough, such as bread dough, results in effective control of moisture loss in such doughs during baking, including rapid baking formats, in high fiber, reduced-calorie or net carbohydrate dough formulations as well as standard dough formulations. Also, the selected crystalline polysaccharide additives are functionally compatible with high moisture dough formulations and baked high moisture dough, including those having high gluten content. The crystalline polysaccharide-modified doughs exhibit good machinability on conventional dough forming equipment. Therefore, a pleasing soft baked product texture and other desirable sensory attributes can be achieved in high fiber, reduced-calorie, net carbohydrate baked products using doughs of this invention.

The selected crystalline polysaccharide additives used individually or in combinations thereof in an effective amount in high moisture dough to prepare high moisture, high fiber baked products in accordance with this invention include:
a) enzyme resistant starch type III ("RS-3") having a melting point with an endothermic peak temperature of at least about 140°C as determined by modulated differential scanning calorimetry (MDSC), and a melting enthalpy determined by MDSC of from about 0.5 to about 4 Joules/g at a temperature of from about 130°C to about 160°C; and
b) microcrystalline cellulose having an average particle size of about 150 µm to about 210 µm; and the like or combinations thereof.

It has been surprisingly discovered that incorporation of either or both of these selected crystalline polysaccharides, as identified above, in yeast and/or chemically-leavened, high moisture dough used in making high moisture, high fiber baked products provides improved moisture retention in raw dough products and after par-baking or full baking, and a softer (less firm) ultimate baked texture as determined by standard penetration and compression force measurements, in a baked component or baked product made from the dough as compared to otherwise similar baked products prepared from doughs without such additives or which contain different types of starches and fiber sources. Moreover, the softer baked texture is provided at least in an interior portion of the baked component while a crispy, browned but not hard nor tough exterior crust can be provided on the same food component. The selected crystalline polysaccharide additives also can be excellent sources of total dietary fiber (TDF) in the baked product. For example, the selected enzyme resistant starch type III having the above-prescribed properties can be readily obtained and used in 50-60% TDF forms, which significantly exceeds in fiber content many prior starches on the market. The selected crystalline polysaccharide additives also have been found to retain a higher percentage of their original fiber content in an intact and non-degraded form after dough and baking processing conditions as compared to other commercial enzyme resistant starches and fiber products. Thus, a higher percentage of the original fiber content introduced in the high moisture dough via this additive is retained and carried over into in the baked product according to embodiments of this invention, providing higher fiber content and thus more healthy and wholesome food products without sacrificing the texture, mouthfeel or flavor attributes of baked products that are expected and desired by consumers. Also, the desirable texture property effects imparted by the selected crystalline polysaccharide additives embodied herein are achieved within a short period of time after commencing baking (e.g., within about 2 to 20 minutes after baking time), which is especially important to consumers of certain applications, such as microwave oven-baked or conventional oven-baked pizza.

It also has been discovered that use of certain coarser particle sizes of the selected enzyme resistant starch type III provides an even softer texture in the baked product without imparting grainy or gritty mouthfeel, as compared to finer sizes of this additive which impart good and suitable textural effects, albeit in smaller magnitude than the coarser particle. This additional level of improvement obtained with coarser particle sizes of the selected RS-3 is considered counter-intuitive and surprising as coarser particles generally would be expected to tend to increase product grittiness and hardness. The average particles sizes of the selected enzyme resistant starch type III for use in preparing a bread component or other high moisture baked component of baked products according to the present invention generally may be in the range of about 45 µm to about 355 µm, particularly about 100 µm to about 255 µm. The preferred coarse-sized particles of the selected enzyme resistant starch type III for use in a bread component or other high moisture baked component of baked products according to the present invention have an average particle size about 150 µm to about 200 µm.

The selected microcrystalline cellulose additive should have an average particle size of about 150 µm to about 210 µm, and particularly about 170 µm to about 190 µm, to impart improved, softer texture in bread components or bread products, or other high moisture baked products. It is believed that the textural benefits achieved by adding microcrystalline cellulose within a particular average particle size range as defined herein, as compared to smaller or larger sizes, in bread doughs has not been previously reported.

Baked products of the invention include bread products such as, for example, bread loaves, rolls, buns, biscuits, pastry breads, pretzels, bagels, moist cakes, and the like, as well as flat breads such as pizza crusts, pie crusts, pita breads, tortillas, pancakes, and the like. Toppings and/or fillings may be used in combination with the improved bread component or bread product to provide a wide array of baked products. The topped or filled baked products containing the bread component include, for example, pizzas, fruit pies, pastries, calzones, pot pies, or other filled or enrobed products, and so forth. In one non-limiting particular embodiment, the baked products of this invention are par-baked microwaveable chilled pizzas, which can be rapidly and easily cooked to provide a soft texture, crispy-surfaced pizza product that is more similar to freshly-prepared pizza dough products than conventional chilled pizzas. The chilled pizzas of the invention include refrigerated and frozen pizzas. In another particular embodiment, high moisture raw dough products are provided which incorporate the crystalline polysaccharide additives.

### Brief Description of the Drawings

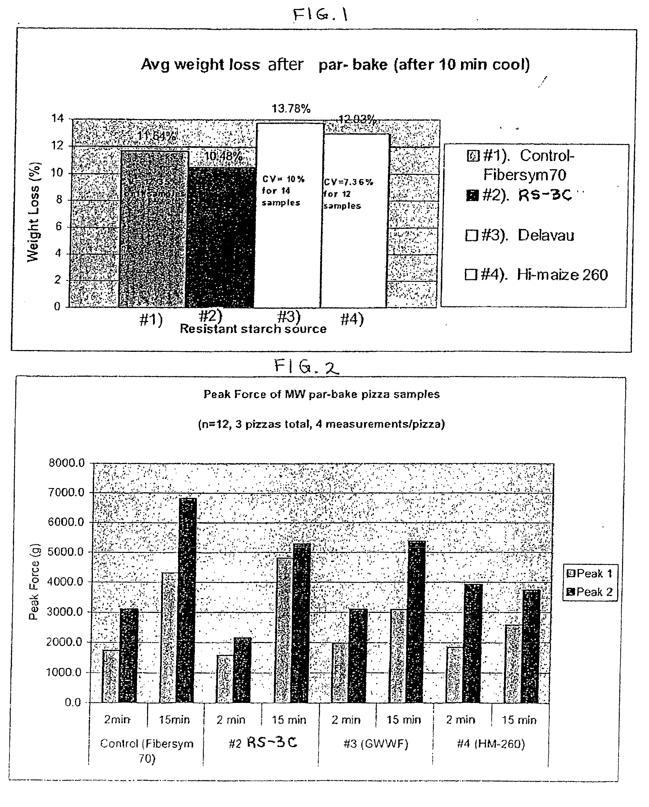

FIG. 1 is a bar graph showing average moisture weight loss after par-baking (with a 10 minute cooling period) for a par-baked pizza crust made with dough incorporating a selected enzyme resistant starch type III in accordance with the present invention as compared to par-baked crusts made with different doughs containing different starch or fiber sources.

FIG. 2 is a bar graph showing peak (total) force using a standard TA.XT2 texture analyzer measurement protocol, measured at two minutes and fifteen minutes after baking completed, required to puncture completely through the entire crust rim of a par-baked topped pizza made with a crust incorporating selected enzyme resistant starch type III as referenced relative to FIG. I as compared to par-baked topped pizzas crusts made with different crusts containing different starch or fiber sources.

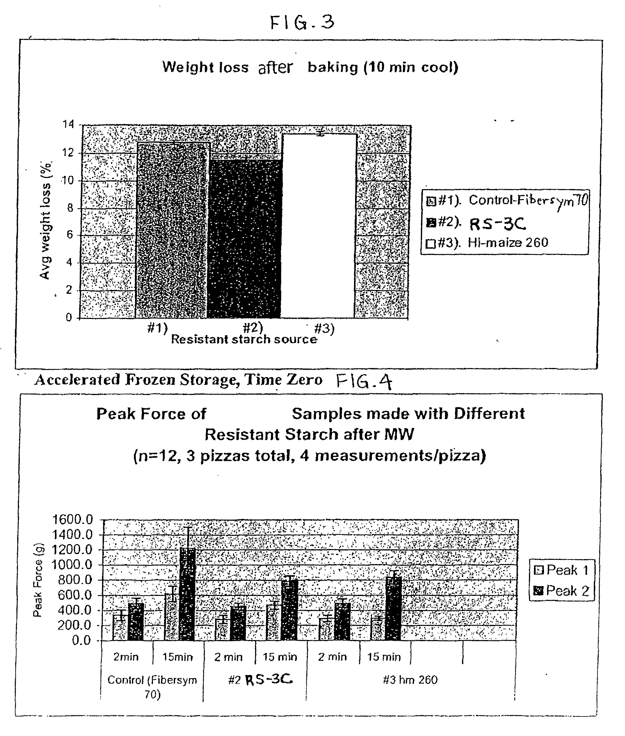

FIG. 3 is a bar graph showing average moisture weight loss after par-baking (with a 10 minute cooling period) for another par-baked pizza crust made with dough incorporating selected enzyme resistant starch type III in accordance with the present invention as compared to par-baked crusts made with different doughs containing different starch or fiber sources.

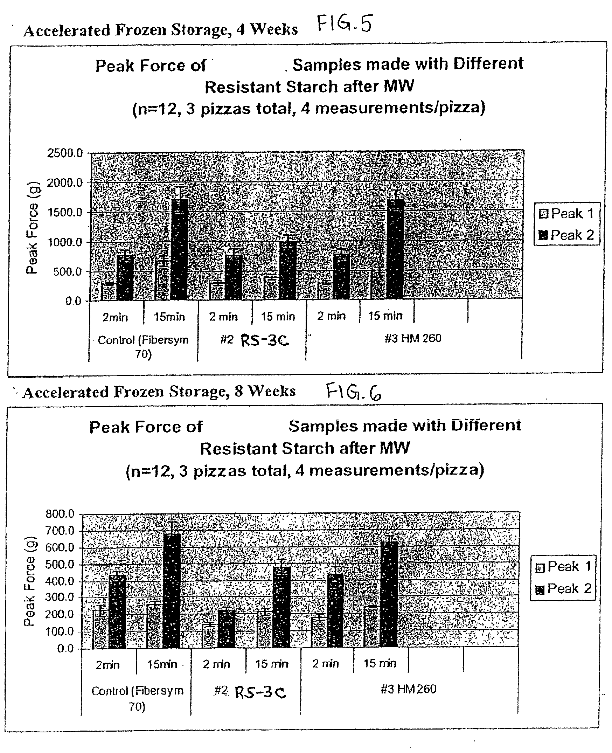

FIG. 4 is a bar graph showing peak (total) force using texture measurement protocol, measured at two minutes and fifteen minutes after baking completed, required to puncture completely through the entire crust rim of a par-baked topped pizza made with a crust incorporating selected enzyme resistant starch type III as referenced relative to FIG. 3 as compared to par-baked topped pizzas crusts made with different crusts containing different starch or fiber sources.

FIG. 5 is a bar graph showing peak (total) force using texture measurement protocol, measured at two and fifteen minutes after baking, required to puncture completely through the entire crust rim of a par-baked topped pizza made with a crust incorporating selected enzyme resistant starch type III as referenced relative to FIG. 3 after four weeks accelerated shelf-life storage as compared to par-baked topped pizzas crusts made with different crusts containing different starch or fiber sources.

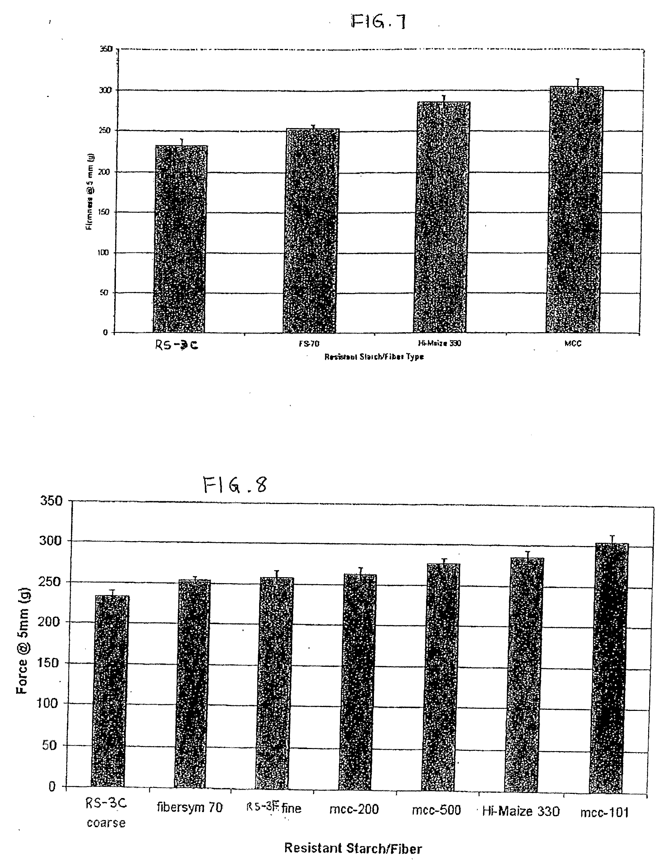

FIG. 6 is a bar graph showing peak (total) force using texture measurement protocol, measured at two minutes and fifteen minutes after baking completed, required to puncture completely through the entire crust rim of a par-baked topped pizza made with a crust incorporating selected enzyme resistant starch type III as referenced relative to FIG. 3 after eight weeks accelerated shelf-life storage as compared to par-baked topped pizzas crusts made with different crusts containing different starch or fiber sources.

FIG. 7 is a bar graph showing firmness measured via a TA.XT2 Texture analyzer compression force measurement for a bread loaf made with dough incorporating selected enzyme resistant starch type III in accordance with the present invention as compared to bread loaves made with different doughs containing different starch sources or a finely-sized microcrystalline cellulose.

FIG. 8 is a bar graph showing firmness measured via a TA.XT2 Texture analyzer compression force measurement for bread loaves made with doughs incorporating different particles sizes of selected enzyme resistant starch type III in accordance with the present invention as compared to bread loaves made with different doughs containing different starches, or microcrystalline cellulose materials of varied particle sizings.

### Detailed Description of the Preferred Embodiments

The baked products of this invention are high moisture, soft-textured, high fiber foods made with high moisture dough, such as bread dough, modified with selected crystalline polysaccharide materials. The modified dough exhibits good machinability on conventional dough forming equipment. The bake products are well-suited for health and wellness food applications, although not limited thereto, including reduced-calorie and/or reduced-fat rapid-cooking topped or filled baked products. They also are suitable for rapid baking formats and sequential baking cycle formats. For purposes herein, unless otherwise indicated "reduced-calorie" means the food product contains at least 25% less calories per serving as compared to the standard or conventional product. Similarly, "reduced-fat" means the food product contains at least 25% less fat per serving as compared to the standard or conventional product. Unless indicated otherwise herein, the designation "reduced-fat" also encompasses low-fat and no-fat products.

As shown by the examples described below, the improved and beneficial effects in baked products made according to the invention have been confirmed experimentally by sensory examination and firmness (standard puncture and compression force) testing of microwave par-baked pizzas and bread loaves made with doughs incorporating the selected polycrystalline polysaccharides in accordance with embodiments herein as compared to doughs made with different starches or fibers.

**Crystalline Polysaccharide Additives.** The selected crystalline polysaccharide materials improve fiber-added baked products with regards to texture and fiber retention during baking operations. The selected crystalline polysaccharide materials are generally used as dough additives and not per se as 'bulking agents," "flour replacers," or "flour substitutes." Any actual replacement (loss) of flour mass in the dough formulation from addition of the selected crystalline polysaccharide or other additives would tend to proportionally reduce or dilute gluten-forming protein or gluten levels in the flour mix and dough, which in turn will tend to adversely affect final properties such as texture in high moisture baked products. Other than the added effective amount of the selected crystalline polysaccharide, the remainder of the dough formulation can correspond to dough formulations used or useful for the particular bread component or bread product, or other high moisture baked product of interest. Gluten levels in the selected crystalline polysaccharide-modified dough generally are maintained at levels which are at least approximately equivalent to that used in the unmodified conventional counterpart of the dough formulation.

**Enzyme Resistant Starch Type III Additive.** The selected enzyme resistant starch type III ("RS-3") is an amylase-resistant starch having a melting point with an endothermic peak temperature of at least about 140°C as determined by modulated differential scanning calorimetry (MDSC), and a melting enthalpy determined by MDSC of from about 0.5 to about 4 Joules/g at a temperature of from about 130°C to about 160°C. This enzyme resistant starch type III imparts unexpectedly superior baking characteristics in high moisture doughs, such as bread doughs, when used in making high moisture, high fiber baked products. It provides baked components and products, such as pizza crusts and so forth, characterized by soft, less firm moist interior crumb having crispy browned yet non-tough crust surfaces, prepared from otherwise typical dough formulations which have been modified with the selected enzyme resistant starch type III additive, as well as in reduced calorie, higher fiber dough formulations. The high melting point of the enzyme resistant starch, as measured by MDSC, permits its use in baked good formulations without substantial loss of enzyme resistance or fiber content upon baking. It may therefore be advantageously used for the production of reduced-calorie baked goods such as topped or filled high moisture baked products. The high-melting point selected enzyme-resistant starch type III is sufficiently heat tolerant that it can be subjected to sequential baking cycles, such as par-baking and final baking, without incurring significant heat-degradation, thereby preserving higher fiber content in the final baked product. It also has a water-holding capacity of less than 3 grams water per gram thereof. The water-holding capacity of the starch-based composition is comparable to that of conventional wheat flour. The selected enzyme resistant starch type III is a high amylose content starch, e.g., containing at least about 60%, particularly about 65% to about 75%, amylose content. The selected enzyme-resistant starch type III is resistant to enzymes such as alpha-amylase, beta-amylase, amyloglucosidase, and pancreatin and provides a reduced-calorie or low-calorie, highly functional ingredient for baked goods.

Additional details on the selected enzyme resistant starch type III are described, in terms of physico-chemical properties and manners ofproduction, in U.S. Pat. No. 6,613,373 B2, which is incorporated herein by reference in its entirety. In general, U.S. Pat. No. 6,613,373 B2 describes a detailed process for preparing the selected enzyme resistant starch type III material in which a starch is treated via gelatinization (stage 1), and selective nucleation/propagation temperature cycling (stage 2), to form the enzyme resistant starch type III; this material may be, if desired, prepared for a subsequent heat-treatment (stage 3) by drying, grinding, and/or conditioning or moisture content adjustment. The starting starches used in preparing the selected enzyme resistant starch type III may be derived from any source. It is generally preferable to use raw starches as the starting starches. Starches which have low lipid content and high contents of amylose or high contents of amylopectins which have long, straight branch chains are preferred. Preferred as a starting starch is a starch containing greater than 40% amylose, preferably at least about 50% amylose, most preferably at least about 60% by weight amylose, based upon the total weight of amylose and amylopectin. The very high melting-point, selected enzyme resistant starch may be produced on a batch, semi-continuous or continuous basis in high yields of at least about 25% by weight, based upon the weight of the original starch ingredient, as determined by the stringent Prosky method, which method is described in. U.S. Pat. No. 6,613,373 B2 and is incorporated herein by reference. The enzyme resistant starch is produced under conditions to avoid discoloration, malodors, and substantial production of lower-melting amylopectin crystals, lower-melting amylose crystals, and lower-melting amylose-lipid complexes.

The selected enzyme resistant starch type III material typically is used in solid particle form, which may be manufactured by techniques such as described in the above-referenced U.S. Pat. No. 6,613,373 B2, or as obtained commercially. A commercial source of the selected enzyme resistant starch type III is available from Tate & Lyle Ingredient Americas, Inc.

The selected enzyme resistant starch type III material may be used in pure or diluted solid particle form as a high moisture dough additive. The dilute forms may comprise dry starch-based compositions comprising at least about 25% by weight, particularly at least 35% by weight, most particularly at least about 50% by weight, of the pure selected enzyme-resistant starch type III, as determined by the rigorous Prosky method. The balance of the starch-based composition or dry blend may comprise gelatinized, amorphous, or non-crystallized starch, a substantial portion of which may be enzyme resistant and contribute to the dietary fiber content of the resulting product. The high-melting point selected enzyme-resistant starch type III is added to a bread formulation or other high moisture baked good formulation in an amount effective to provide the desired effects, i.e., such as the softer, less firm baked texture. To obtain the desired effects, the selected enzyme resistant starch type III ("RS-3") is generally added to high moisture dough, such as bread dough, in amount of at least about 1 wt%, and particularly may range from about 1 to about 60 wt%, particularly about 2 to about 30 wt%, and more particularly about 3 to about 15 wt% (based on pure RS-3 content), although the optimal amount may vary depending on the type of baked product. For instance, doughs for denser bread such as pizza crust doughs may preferably have a somewhat larger amount of the selected resistant starch as compared to bread loaf doughs. The pure selected enzyme-resistant starch type III is used as an additive and not per se as a flour substitute. Gluten levels of the dough mix should be adjusted, if necessary, in view of the added quantity of selected enzyme-resistant starch type III, to maintain gluten levels at customary or otherwise suitable baking levels for the bread doughs or other high moisture doughs being used.

Another discovery of the present invention is that use of certain coarser particle sizes of the selected enzyme resistant starch type III provides an even softer texture in the baked product without imparting grainy or gritty mouthfeel, as compared to finer sizes of this additive which impart good and suitable textural effects, albeit in smaller magnitude than the coarser particles. The average particles sizes of the selected enzyme resistant starch type III for use in preparing the bread component or other high moisture baked component of baked products according to the present invention may be in the range of about 45 µm to about 355 µm, and particularly about 100 µm to about 250 µm. The preferred coarse-sized particles of the selected enzyme resistant starch type III for use in the bread component or other high moisture baked component of baked products have an average particle size about 150 µm to about 200 µm. In a particular non-limiting embodiment, the selected enzyme resistant starch type III has a particle size distribution determined via ROTAP sieve shaker, as follows (based on U.S. Standard mesh): +50 mesh: 1-1.8%, +60 mesh: 1.3-2.3%, +80 mesh: 12-14%, +100 mesh: 20-22%, +200 mesh: 56-59%, through (minus) 200 mesh: 4.5-5.5%.

**Microcrystalline Cellulose Additive.** Cellulosic materials for use in the baked goods of the present invention are microcrystalline cellulosic (MCC) materials of prescribed particle size. Selected microcrystalline cellulose for use herein has an average particle size of about 150 µm to about 210 µm, particularly about 170 µm to about 190 µm, and more particularly about 175 µm to about 185 µm. In a particular non-limiting embodiment, the selected microcrystalline cellulose that is used as dough additive has a particle size distribution determined via ROTAP sieve shaker, as follows (based on U.S. Standard mesh): +50 mesh: 8.5-9.5%, +60 mesh: 6.5-8%, +80 mesh: 17-19%, +100 mesh: 13-15%, +200 mesh: 26-28%, through (minus) 200 mesh: 23.5-25.5%. In another particular embodiment, at least about 30 wt% of the selected microcrystalline cellulose passes through 65 U.S. Standard mesh sieve (210 micron) and is retained on 100 U.S. Standard mesh sieve (149 micron)(i.e., the fraction that is -210 µm, +149 µm). Such materials are typically obtained by acid hydrolysis of alpha-cellulose and classification of the particulated product to isolate a fraction of particles having the above-indicated desired average particle size. As a result of acid hydrolysis, the degree of polymerization (average number of anhydroglucose units) generally is from about 125 to about 375, and less than 15% of the material has a degree of polymerization of less than 50 or more than 550. As a result of the hydrolysis and subsequent washing steps, the raw material has the form of crystallite aggregates having a particle size ranging from about 1 micron to about 300 microns. The preparation of the raw microcrystalline cellulose, and its properties, are disclosed in detail in U.S. Pat. No. 3,023,104, issued Feb. 27, 1962 and incorporated herein by reference. The starting material alpha-cellulose is available in purified mechanically-disintegrated food-grade form obtained by processing cellulose as pulp from fibrous plant materials, and is available in several grades of fineness.

As indicated, the microcrystalline cellulose for use in baked-products in accordance with this invention is selected as a fraction having an average particle size of about 150 µm to about 210 µm. This fraction can be isolated by conventional particle classification methods and equipment. This fraction of MCC also may be commercially obtained. As compared to baked products made with selected MCC according to methods of the present invention, the texture of bake goods is observed to be significantly less soft, i.e., harder or tougher, as determined by standard penetration tests, when microcrystalline cellulose is used having average particle sizes values that are outside (below or above) the prescribed range of about 150 µm to about 210 µm. To obtain the desired effects, microcrystalline cellulose of the desired particle size is generally added to high moisture dough, such as bread dough, in amount of at least about 1 wt%, and particularly may range from about 1 to about 40 wt%, particularly about 2 to about 20 wt%, and more particularly about 3 to about 10 wt%, although the optimal amount may vary depending on the type of high moisture baked product.

**Dough Formulation.** The following descriptions refer to preparation and use of bread dough for purposes of the provided non-limiting illustrations, but it will be appreciated that the concepts of the invention are considered to be generally applicable to high moisture doughs. The crystalline polysaccharide additives may be combined with bread dough ingredients to provide bread doughs which exhibit good machinability on conventional dough forming equipment.

The bread dough formulation generally will contain a leavened mixture comprising a major proportion of flour, water, and the selected crystalline polysaccharide. The bread dough may be yeast and/or chemically leavened. It also may contain minor amounts of other functional and flavoring additives commonly used in bread doughs such as oil, protein source, chemical leavening agent, sweetener, preservative, salt, dough conditioners, herbs, seasonings, spices, etc. The dough also can be fortified with macronutrients and/or micronutrients, such as iron preparations, bioavailable calcium sources, vitamins, minerals, amino acids and other nutraceuticals. Vitamin and vitamin-like nutritional fortification can be obtained from Vitamin C, Vitamin E sources, Vitamin D sources, beta carotene sources, and so forth. Vitamin C also may be used as a functional additive in a conventional manner for gluten strengthening, and other performance quality enhancements and benefits.

Exemplary of the flour component or farinaceous materials which may be used, for example, are whole grain or refined wheat flour, corn flour, corn masa flour, oat flour, barley flour, rye flour, spelt flour, triticale flour, buckwheat flour, millet flour, quinoa flour, teft flour, white rice flour, brown rice flour, soy flour, potato flour, grain sorghum flour, tapioca flour, graham flour, or starches, such as corn starch, wheat starch, rice starch, potato starch, tapioca starch, physically and/or chemically modified flours or starches, such as pregelatinized starches, and mixtures thereof. Hard or soft wheat flours, red or white wheat flours, winter or spring, and blends thereof, all purpose flours, and so forth, may be used. The flour may be bleached or unbleached. Wheat flour or mixtures of wheat flour with other grain flours are preferred. High gluten flours are generally preferred. For pizza crust applications, high gluten flours are particularly desirable. High gluten flours include, for example, flours made from milled hard wheat grain (e.g., hard red winter wheat, hard white wheat, and hard white spring wheat), or spelt. Vital wheat gluten or other wheat protein fractions, including those of gliadin or glutenin, may be added to flours as a protein source or functional agent. For example, lower gluten content flours, such as triticale, can be used with vital wheat gluten added to increase gluten content. For pizza crust doughs, a total gluten protein content of at least about 3 wt% gluten may be used, including that native to flour.

The dough of the invention generally uses a yeast and/or chemical leavened dough, typically made by combining about 100 parts by weight of wheat flour with about I part of yeast, typically in an instant active creamy aqueous form. Moisture is typically added to the ingredients by premixing the moisture with the ingredients and mixing the hydrated material into the dough; alternatively, water can be added directly to the mixer with the dry ingredients. The moisture contents of the doughs of the present invention should be sufficient to provide the desired consistency to enable proper forming, machining, and cutting of the dough. High moisture doughs used in the practice of embodiments of the invention contain sufficient total water, taken into account all sources of moisture including separately added water, to provide a raw dough containing at least about 20 wt% moisture, particularly at least about 25 wt% moisture, more particularly at least about 30 wt% moisture, even more particularly at least about 35 wt%, and most particularly at least about 45 wt% moisture. In one non-limiting embodiment, the moisture content of the raw dough is about 25 wt% to about 50 wt%.

The dough should incorporate enough of the selected crystalline polysaccharide to provide at least about 1 wt%, particularly 2 to about 50 wt%, and more particularly about 3 to about 30 wt%, of the additive in the finished baked product in order to provide the desired textural effects. For pizza crust doughs, the dough typically incorporates enough of the selected crystalline polysaccharide to provide such benefits by inclusion of at least about 1 wt%, particularly 2 to about 50 wt%, and more particularly about 3 to about 30 wt%, of the additive.

Lipid content of the dough material can be adjusted and derived from both room temperature solid fatty materials and room temperature oil materials. Solid fats can include a variety of the shortening materials available on the market (e.g., lard, butter, margarine, partially hydrogenated oils, fully hydrogenated oils, low trans fatty acid oils, trans free fatty acid oils, low calorie fats, low linoleic and/or linolenic acid oils, high oleic acid oils, other natural or synthesized triacylglycerols derived having similar or different combinations of fatty acids, and blended products). Oily materials are also helpful in attaining the lipid content of the dough of the invention. Such oils typically comprises vegetable oils derived from a variety of sources, such as soybean oil, corn oil, canola oil, cottonseed oil, olive oil, safflower oil, palm kernel oil, palm oil, rapeseed oil, safflower oil, sesame oil, sunflower seed oil, and mixtures thereof. The oil is typically present in the formula in an amount from about 0 to about 10 wt %, depending on the food application and food category.

The dough compositions of the present invention may contain up to about 5% by weight of a chemical leavening system, based upon the weight of the dough. Exemplary of chemical leavening agents or pH-adjusting agents which may be used include alkaline materials and acidic materials such as sodium bicarbonate, ammonium bicarbonate, monocalcium phosphate monohydrate, calcium acid pyrophosphate, sodium acid pyrophosphate, diammonium phosphate, tartaric acid, sodium aluminum phosphate, sodium aluminum sulfate, glucono-delta-lactone, singly or in combinations thereof, and the like. The yeast or chemical leavening agent may be used alone, or in combinations thereof.

Emulsifiers may be included in effective, emulsifying amounts in the doughs of the present invention. Exemplary emulsifiers which may be used include, mono- and di-glycerides, polyoxyethylene sorbitan fatty acid esters, DATEM (di-acetyl tartaric acid esters of mono- and diglycerides), lecithin, stearoyl lactylates, and mixtures thereof. Exemplary of the polyoxyethylene sorbitan fatty acid esters which may be used are water-soluble polysorbates such as polyoxyethylene (20) sorbitan monostearate (polysorbate 60), polyoxyethylene (20) sorbitan monooleate (polysorbate 80), and mixtures thereof. Examples of natural lecithins which may be used include those derived from plants such as soybean, rapeseed, sunflower, or corn, and those derived from animal sources such as egg yolk. Soybean-oil-derived lecithins are preferred. Exemplary of the stearoyl lactylates are alkali and alkaline-earth stearoyl lactylates such as sodium stearoyl lactylate, calcium stearoyl lactylate, and mixtures thereof. Exemplary amounts of the emulsifier which may be used range up to about 3% by weight of the dough.

A source of protein, which is suitable for inclusion in baked goods, may be included in the doughs of the present invention to promote Maillard browning, add functionality, and/or increase protein content for low net carb products, for example. The source of protein may include milk protein concentrate, soy protein sources (e.g., soy oil, soy meal, soy flour, soy milk, soy concentrate, soy isolate, etc.), leguminous protein sources other than soy (e.g., peanut flours, green pea flours, chick-pea flours, lupin flours, kidney bean flours, etc.), wheat protein fractions, vital wheat gluten, non-fat dry milk solids, dried or powdered eggs, mixtures thereof, and the like. The amount of the proteinaceous source may, for example, range up to about 50% by weight, based upon the weight of the dough.

The doughs also may include sweeteners. These include sugars such as sucrose, fructose, glucose, high fructose corn syrup, or other sweet mono- or disaccharides commonly used in baking materials. Such sugars can comprise sucrose, fructose, glucose, high fructose corn syrup, or other sweet mono- or disaccharides commonly used in baking materials. The total sugar solids content of the doughs of the present invention may range from zero up to about 30% by weight, depending on the product. For bread doughs, the total sugar content generally may range between 0 to about 10 wt%, particularly between about 0 to about 5 wt%. Cake type products may contain higher amounts of sweetener. All or a portion of the natural sweetener content can be substituted by or augmented with artificial sweetener, nonnutritive sweetener, high intensity sweetener, sugar alcohol materials, and the like.

The doughs of the present invention may include antimycotics or preservatives, such as calcium propionate, potassium sorbate, sorbic acid, sodium benzoate, nisin, and the like, singly or in combinations thereof. Exemplary amounts may range up to about 1% by weight of the dough, to assure microbial shelf-stability.

As indicated, the doughs of the present invention may also include minor amounts of other ingredients, such as salt, seasonings, etc., in customary amounts for bread doughs. In addition to the fiber content introduced into the dough via the selected crystalline polysaccharides, the dough materials also may be formulated with additional soluble or insoluble dietary fiber sources, such as pysllium gum, oat fiber, wheat fiber, barley fiber, polydextrose, β-glucans, celluloses, hemicelluloses, pectin, lignin, resistant starches, resistant maltodextrins, inulin, fructooligosaccharides or other similar completely or partially indigestible materials, gums, fat mimetics, or bulking agents. The dough may contain 0-0.5 wt% cheese content. Cheese generally is not a requisite dough component.

**Dough Mixing and Dough Products.** The dough formulations of the invention can be formed into a useful bread product using a variety of techniques. The formulations can be conventionally mixed into a useful yeast and/or chemically leavened dough mixture and then formed into the desired product using conventional technologies. The doughs typically will be mixed, sheeted, extruded, co-extruded or hot pressed, and proofed. After mixing the dough, the sequence of the other operations is not particularly limited and may be varied. The raw dough may be directly used in baking operations, or alternatively it may be stored under refrigerated or frozen conditions as a chilled product until used later. The dough may also may be topped or filled to provide a composite dough product that can be subsequently baked. Depending on the product, the dough may be pre-shaped, optionally par-baked, and topped; or alternatively, it may be co-extruded with a filling. The topped or filled dough may be directly used in baking operations, or alternatively it may be stably stored under refrigerated or frozen conditions as a chilled product until used later. The dough and topped/filled composite doughs also may be packaged in any suitable conventional manner for storage and handling.

**Baked Product Preparation.** The dough of the invention can be cooked to provide many high moisture baked products such as bread loaves, rolls, biscuits, pastry breads, pretzels, bagels, pie crusts for sweet or savory pies, pizza crusts for a variety of pizza recipes, calzone products, pocketed bread products and similar applications. The high moisture baked products may have a relative vapor pressure ("water activity," A_{w}) of greater than 0.72, particularly greater than 0.75, and more particularly greater than 0.80. They also may contain high fiber content while still exhibiting a soft crumb and crispy crust. The total fiber content of the baked product may comprise at least about 1 wt%, and range from about 1 wt% to about 40 wt%. As indicated, the crystalline polysaccharide additives contribute to the final total dietary fiber content of the finished high moisture, soft-textured baked product.

**Frozen Pizza Preparation.** As indicated, this invention is applicable to a wide variety of baked products. One significant application is frozen pizzas that can be baked at home or in retail food service locations in a microwave oven or standard oven in a short period of time to form a fully risen, bready, soft body-crispy exterior pizza. It will be appreciated that this embodiment also is applicable to refrigerated pizzas.

The main components of a pizza or pizza pie include a pizza crust, sometimes referred to as a pie shell, and toppings. The topping materials typically include a tomato-based sauce and one or more types of cheese, although other topping materials also may be included, such as seasonings, herbs, spices, salt, meats, vegetables, fruits, mushrooms, etc. The crust serves as the basic support network for the other components and contributes to the texture and flavor of the food product. The pizza crusts may be formed from mixed and proofed dough, which is shaped into relatively flat sheet form and cut into discrete portions, which often have a circular or squared-shape. Pizza crusts may be raw dough, partially-baked (par-baked), or fully baked after formation and before topping application. Pizza crusts may be chilled to help stabilize and prevent deterioration of the dough during the handling period that occurs after crust formation, and any par-baking, until the toppings are applied and the resulting food product is packaged and stored in a chilled form. Chilled crusts may be cooled, refrigerated, and/or frozen. A powered conveyor refrigerator or blast freezer may used to reduce the temperature of the crusts as an in-line operation. For example, refrigerated crusts may exit the refrigerator at a temperature between approximately 0°C to 4°C. Frozen crusts may exit a freezer at a temperature below 0°C. The par-baked crusts may be fed at an approximately regular pitch onto a conveyor or other transport device which transports crusts individually to subsequent handling units for pizza assembly, such as food topping dispensing operations and packaging operations (e.g., placement of singulated crusts on cardboard backings, transport to a topping dispensing unit, wrapping the topped product and storing it under chilled conditions).

The par-baked crust can be topped on-site with cheese, sauce and other toppings. Alternatively, the crusts can be packaged in multiple crust packaging and shipped off-site to a location for topping, packaging and shipment to retail outlets. When stored and sold at a retail outlet, the pizzas are maintained in frozen condition in freezer chests before purchase. Consumers can then purchase the frozen pizzas and can maintain them at home in a frozen state until cooked. Commonly, the pizzas are then removed from conventional packaging materials and placed in consumer ovens and cooked at a microwave power setting of about 700 to about 1200 watts in a conventional microwave oven or combination microwave thermal oven for a period of time of about 2 to about 5 minutes, or alternatively in a regular oven baking for a longer time period than 2-5 minutes (e.g., about 8-18 minutes).

It has been experimentally observed and confirmed that incorporation of either or both of these selected crystalline polysaccharides, as identified above, in leavened bread dough provides improved moisture retention after par-baking or full baking, and a softer (less firm) ultimate baked texture as determined by standard penetration and compression force measurements, in pizza crusts or bread loaves made from the modified dough as compared to otherwise similar bread products prepared from doughs containing different representative commercial resistant starches and fiber sources. The softer baked texture is provided at least in an interior portion of the bread component while a crispy, browned but not hard nor tough exterior crust can be provided on the same food component. The tenderness, crispness and toughness of a cooked, baked crust can be measured using texture analyzer equipment, such as a TA.XT2 Texture analyzer (Stable Micro System Company).

Preferably, the high fiber, reduced-calorie formats of pizzas made according to this invention contain no less than 5 g of dietary fiber and no greater than 30 g total carbohydrates, with added sugars constituting no greater than 1 g thereof, per 170-200 g. The added crystalline polysaccharide additives have been found to make it possible to increase total dietary fiber content of the food product without adversely affecting functionality or product texture.

The examples that follow are intended to further illustrate, and not limit, embodiments in accordance with the invention. All percentages, ratios, parts, and amounts used and described herein are by weight unless indicated otherwise.

### Examples

**EXAMPLE 1.** A par-baked pizza crust and topped pizza was made with dough incorporating a selected enzyme resistant starch type III in accordance with the present invention which was compared to par-baked crusts and topped pizzas made with different doughs containing different starch or fiber sources in terms of moisture loss upon par-baking the crust, and the firmness/saftness of the crust as well as the sensory properties of the fully baked topped pizzas.

A high-protein, low net carbohydrate, high fiber microwave pizza crust formulation was used as shown below, where an enzyme resistant starch type III, designated generally as "RS-3C" for purposes of these examples, and obtained from Tate & Lyle Ingredient Americas, Inc., replaced a commercial starch (Fibersym^{™} 70, wheat based resistant starch type IV, RS-4, MGP Ingredients, Inc.) referred to herein as FS-70. According to the manufacturer, RS-3C had an average particle size of 170 µm. As measured by ROTAP, 5 wt% passed through 200 US Std. Mesh (74 microns). RS-3C has a melting point exceeding 140°C and melting enthalpy in the range of 0.5 to about 4 Joules/g at a temperature of about 130°C to about 160°C, as determined by MDSC. For comparisons, Hi-Maize 260 (resistant starch type II, RS-2, National Starch Carbohydrate Nutrition, a unit of National Starch and Chemical Company) and Delavau white wheat fiber were incorporated at the same usage level as RS-3C and FS-70. Water content was adjusted slightly to compensate for varying moisture contents of ingredients. The invention formula consisted of: RS-3C (10.71%), vital wheat gluten (8.96%), milk protein concentrate (7.22%), whole wheat flour (9.58%), roasted, defatted soy flour (6.10%), compressed yeast (4.60%), cellulose powder (2.21%), barley flour (2.07%), oat fiber (2.07%), egg white (1.56%), baking powder (0.58%), dough conditioner including lecithin, DATEM, and ascorbic acid (0.59 wt%, combined amount, added via baking powder)(0.59%, combined), sucrose (2.08%), salt (0.23%), water (38.98%), corn oil (2.12%), liquid flavor (0.29%), and sucralose (0.03%). Ingredients were mixed in a 20 quart Hobart mixer with dough hook and mixed to optimum development. Dough was divided, rounded, and proofed for 30 min. at 105°F, 85% RH. The proofed dough balls were dipped in breadcrumbs, hot pressed at about 375°F to form a round pizza shape, then par-baked at 425°F until light golden brown in an impingement oven. Average moisture loss after par-baking (after 10 min cooling period) results are illustrated in FIG. 1, and were in the following order a): RS-3C modified crust (10.5%) < FS-70 modified crust (11.6%) < Hi-Maize 260 modified crust (12.9%) < Delavau modified crust (13.8%), indicating that RS-3C modified crusts lost the least amount of moisture after par-baking. Crusts were blast frozen and then topped (60g sauce and 58g cheese). Topped crusts were blast frozen and MAP packed for storage (1 month frozen (-20°F) with no temperature abuse). The pizzas were heated in an 1100 watt microwave oven for about 2-5 minutes. Standard penetration measurements were made on the crusts using a TA.XT2 Texture analyzer (Stable Micro System Company). Crusts made with RS-3C had the softest texture (lowest mean peak force, g), as measured 2 minutes after microwaving (5000g vs. ~7000g for FS-70) (see FIG. 2). An informal sensory panel evaluated the pizza prototypes as part of a blind experiment. FS-70, RS-3C and Hi-maize 260 were deemed acceptable and comparable in overall texture and flavor. The Delavau white wheat fiber modified pizza crust was not acceptable (having gritty texture, non-hydrated white particles and an off-flavor). Overall preference was in the following order: RS-3C modified pizza crust > Hi-Maize 260 modified pizza crust > FS-70 modified pizza crust > Delavau modified pizza crust. Analysis of pizza crust total dietary fiber (TDF) indicated that % of TDF retained after processing was highest for RS-3C modified crusts: RS-3C modified crust (98.7%) > Hi-Maize 260 modified crust (93.2%) > FS-70 modified crust (88.3%) > Delavau modified crust (78.8%).

**EXAMPLE 2.** Another par-baked pizza crust and topped pizza was made with a different dough formulation incorporating a selected enzyme resistant starch type III in accordance with the present invention and was compared to par-baked crusts and topped pizzas made with different doughs containing different starch or fiber sources in terms of moisture loss upon par-baking the crust, and the firmness/softness of the crust as well as the sensory properties of the fully baked topped pizzas after accelerated storage times of 0 weeks, 4 weeks and 8 weeks.

A high-protein, low net carbohydrate, high fiber microwave pizza crust formula, which was the same as used in Example 1, in which RS-3C replaced a commercial, resistant starch type IV (FS-70), was slightly modified as follows: SSL, sugar, and egg white ingredients were removed from that listed in Example 1. For comparison, other resistant starches were incorporated at an equal fiber percentage level (controls FS-70 and Hi-Maize 260). Formula % of resistant starches used were: RS-3C (9.86%), control FS-70 (8.58%) and Hi-Maize 260 (9.72%). Water content was adjusted slightly to compensate for varying moisture contents of ingredients. The pizza making process was similar to that described in Example 1 (i.e., hot press conditions were slightly adjusted). Pizzas were stored under 8-week accelerated shelf-life conditions, and then reheated in a microwave oven similar to that described in Example 1. Standard penetration measurements were made on a TA.XT2 Texture analyzer (Stable Micro System Company). Pizza crusts made with RS-3C lost less moisture after par-baking than those made with controls FS-70 and Hi-Maize 260 (moisture loss amount: RS-3C modified crust< FS-70 modified crust< Hi-Maize 260 modified crust) (see FIG. 3). At time zero, RS-3C pizzas required the lowest mean peak force to completely puncture through crust at 2 and 15 min after microwaving, and therefore, was the softest (RS-3C modified crust< Hi-Maize 260 modified crust<< FS-70 modified crust) (see FIG. 4). At 4 weeks of accelerated shelf-life, RS-3C modified pizza crusts were slightly less firm at 2 minutes after microwaving than other resistant starches (though not statistically different), but were dramatically lower in a statistically significant manner in firmness at 15 minutes after microwaving (RS-3C modified crust« Hi-Maize 260 modified crust = FS-70 modified crust) (see FIG. 5). At 8 weeks of accelerated shelf-life, RS-3C pizzas were significantly less firm than samples made with other resistant starches (RS-3C modified crust« Hi-Maize 260 modified crust = FS-70 modified crust) at both 2 and 15 minutes after microwaving (see FIG. 6). In fact, samples made with RS-3C were of similar firmness at 15 minutes after microwaving as FS-70 and Hi-Maize 260 were at 2 minutes after microwaving. An informal sensory panel evaluated the pizza prototypes in a blind taste test. The attributes evaluated were: Crispiness (center), Hardness (center), Springiness (center), Hardness (edge) and Dryness (edge). Through the 8-week accelerated testing, all variables were considered acceptable in texture and eating quality. Overall preference rating for 8-week accelerated shelf life was in the following order. RS-3C modified crust> FS-70 modified crust> HM 260 modified crust.

**EXAMPLE 3.** A bread loaf was made with a simplified dough formulation incorporating a selected enzyme resistant starch type III of particles size and crystalline polysaccharide material of a particle size range in accordance with the present invention which were compared to bread loaves made with different doughs containing different starch or fiber source particles sizes in terms of the firmness/softness of the crust as well as the sensory properties of the baked product.

A model dough system produced by a benchtop baking method, consisting of flour, water, chemical leavenings, and resistant starch was used to evaluate the effect of resistant starches on texture in a controlled manner. Dough moistures were held constant. The dough system formula is as follows: flour (46.8%, dry basis), resistant starch or MCC (5.2%, dry basis), sodium bicarbonate (1.5%, dry basis), sodium aluminum phosphate (1.5%, dry basis), water (45%, added and from ingredients). Doughs were mixed at a constant time (to an optimal development for a control dough) in a 5 qt. Hobart mixer with dough hook. After mixing, doughs were allowed to rest for 1 hour. Doughs were divided into balls of equal mass and pressed with a 70mm cylinder press with 7500 g of force for 1 sec. Pressed doughs were baked at 400°F for 30 min. Baked products were allowed to cool for 20 min and then tested for texture profile, and moisture loss at 2 minutes and 20 minutes after baking. Uniaxial compression measurements were made on a TA.XT2 Texture analyzer (Stable Micro System Company). Tops of loaves were cut off to expose a flat interior region of loaf and internal crumb texture was measured. A cylindrical texture analyzer probe was inserted into 4 points of each loaf. The texture analyzer probe was inserted 5 mm into crumb and peak force was recorded. A comparison starch, Hi-Maize 330, was a commercial enzyme resistant starch type III, made by National Starch Carbohydrate Nutrition, a unit of National Starch and Chemical Company. A microcrystalline cellulose material, MCC-101, was commercially obtained from Blanver Farmoquimica Ltda (San Paulo, Brazil). Firmness test results for the various baked products are illustrated in FIG. 7, and were as follows: Mean peak force at 5mm was: RS-3C modified bread (233g) < FS-70 modified bread (254g) < Hi-Maize 330 (a commercial enzyme resistant starch type III) modified bread (285 g) < microcrystalline cellulose (MCC) (305 g). Differences were significant at p< 0.05, except those between Hi-Maize 330 and MCC, which were not significant (p > 0.05). Mean moisture bake losses were: Hi-Maize 330 (7.6%) < RS-3C (7.9%) < MCC (8.10%) < FS-70 (8.2%). Differences were not statistically significant. Results confirmed the effect of RS-3C on improving texture (i.e., softness) of baked products.

**EXAMPLE 4.** Supplemental experimental runs were conducted on the doughs to investigate the possible effect of particle size on the results. Added to the doughs used to make the baked products were the same types of starch or MCC products as described above in Example 3 except that different particle sizes were tested for MCC, and enzyme resistant starch type III that meets the above-identified melting point and enthalpy criteria associated with this dough ingredient in accordance with this invention. The enzyme resistant starch type III used in accordance with this invention was tested at two average particle sizes: the above-discussed RS-3C size, as a "Coarse" size thereof, and a RS-3F size, as a "Fine" size thereof Hi-Maize 330 was previously marketed as Novelose 330 which was previously analyzed and reported to have melting point and enthalpy properties outside the applicable criteria of the present invention (see, e.g., U.S. Pat. No. 6,613,373 B2). The RS-3C had a full particle size distribution determined via ROTAP sieve shaker, as follows: +50 mesh: 1.4%, +60 mesh: 1.8%, +80 mesh: 13.2%, +100 mesh: 20.8%, +200 mesh: 57.6%, through (minus) 200 mesh: 5%. The MCC-200 had a particle size distribution determined via ROTAP sieve shaker, as follows: +50 mesh: 9%, +60 mesh: 7.2%, +80 mesh: 18.2%, 100 mesh: 13.8%, +200 mesh: 26.8%, through (minus) 200 mesh: 24.4%.

The particle size data and test results are shown in Table 1 below. The results are also illustrated via bar graph in FIG. 8.

**Table 1**

| | Particle Size | | |
|---|---|---|---|
| Starch/Fiber Ingredient | Avg. Particle Size (µm) | ROTAP through 200 US Std. Mesh (74 microns), (%) | RS-Type |
| MCC-500 | 250 | 1.6 | n/a |
| RS-3C, Coarse | 170 | 5 | III |
| MCC-200 | 180 | 24.4 | n/a |
| RS-3F, Fine | 100 | 28 | III |
| MCC-101 | 50 | 68.6 | n/a |
| Hi-Maize 330 | 75 | 94 | III |
| Fibersym 70 | <60 | n/a | IV |

The result, as shown in FIG. 8, illustrate that the sample containing the coarser RS-3C yielded the best results (i.e., the softest, least firm crust), and that when a finer ground RS-3F sample was tested, resulting firmness increased relative to the RS-3C modified sample but was still less than the tested commercial RS-3 (Hi-Maize 330) or other MCC samples. A larger MCC (MCC-200) sample than previously tested was used and firmness decreased to a similar amount as RS-3F fine and Fibersym^{™} 70 (RS-4). But when an even larger MCC sample was tested (MCC-500), products were firmer than MCC-200. This indicates that a particle size effect may be present for MCC, but there appears to be a limit. "Reported average particle size" data was based on data received from the respective additive suppliers, while ROTAP data was conducted on-site and refers to the % of particles that passed through a 74 micron (200 US Standard Mesh) sieve.

While the invention has been particularly described with specific reference to particular process and product embodiments, it will be appreciated that various alterations, modifications and adaptations may be based on the present disclosure, and are intended to be within the spirit and scope of the present invention as defined by the following claims.

## Claims

1. A high moisture, high fiber baked product comprising a high moisture baked component comprising a crystalline polysaccharide of a type and amount effective to increase total dietary fiber content retention and reduce firmness as determined by penetration and/or compression force of the high moisture baked component as compared to a similar baked product lacking the crystalline polysaccharide.

2. The baked product of claim 1, wherein the crystalline polysaccharide comprises an enzyme resistant starch type III having a melting point with an endothermic peak temperature of at least about 140°C as determined by modulated differential scanning calorimetry (MDSC) and a melting enthalpy of from about 0.5 to about 4 Joules/g at a temperature of about 130°C to about 160°C as determined by MDSC.

3. The baked product of Claim 1 or 2, wherein the crystalline polysaccharide comprises microcrystalline cellulose having an average particle size of about 150 µm to about 210 µm.

4. The baked product of any one of Claims 1 to 3, wherein the moisture content of the baked product comprises about 25 to about 45 wt%.

5. The baked product of any one of Claims 1 to 4, wherein the baked product contains at least about 1 wt% of the crystalline polysaccharide.

6. The baked product of any one of Claims 1 to 5, wherein the baked product is a bread product selected from the group consisting of bread loaves, rolls, buns, biscuits, pastry breads, moist cakes, pretzels, bagels, pitas, tortillas, pancakes, pizza crusts, and pie crusts.

7. The baked product of any one of Claims 1 to 6, wherein the baked product is a pizza crust.

8. The baked product of any one of Claims 1 to 7, wherein the baked product comprises the bread component in combination with a topping or filling.

9. The baked product of any one of Claims 1 to 5, wherein the baked product is selected from the group consisting of pizzas, fruit pies, pastries, calzones, pot pies, and dough-enrobed bread foods.

10. The baked product of any one of Claims 1 to 5 or 9, wherein the baked. product is a chilled pizza.

11. The baked product of any one of Claims 1 to 5 , 9 or 10 , wherein the baked product is a microwaveable par-baked frozen pizza.

12. The baked product of any one of Claims 1 to 5 or 9 to 11, wherein the baked product is a pizza and the bread component provides 5-30 g dietary fiber per 170-200 g serving of the pizza.

13. The baked product of any one of Claims 1 to 5 or 9 to 12. wherein the baked product is a frozen pizza containing, per 170-200 g serving, ≤ 350 calories, ≤ 13 g total fat, ≥ 15 g protein, and ≤ 30 g total carbohydrates comprising ≤ 1 g total sugars and 5-30 g dietary fiber.

14. The baked product of any one of Claims 1 to 13, having a relative vapor pressure of at least 0.75.

15. The baked product of any one of Claims 1 to 14, further comprising increased moisture retention as compared to a similar baked product lacking the crystalline polysaccharide.

16. A bread dough comprising a leavened mixture comprising a major proportion of flour, at least about 25 wt% water and at least about 1 wt% of a crystalline polysaccharide, the percentages based on flour content, wherein the dough after baking results in increased total dietary fiber retention and reduced firmness as determined by penetration and/or compression force, as compared to a similar baked dough lacking the crystalline polysaccharide.

17. The bread dough of claim 16, wherein the crystalline polysaccharide is selected from the group consisting of i) an enzyme resistant starch type III having a melting point with an endothermic peak temperature of at least about 140°C as determined by modulated differential scanning calorimetry (MDSC) and a melting enthalpy of from about 0.5 to about 4 Joules/g at a temperature of from about 130°C to about 160°C as determined by MDSC, and ii) microcrystalline cellulose having an average particle size of about 150 µm to about 210 µm.

18. The bread dough of Claim 16 or 17, comprising a total gluten content of at least about 3 wt%.

19. The bread dough of any one of Claims 16 to 18, wherein the dough after forming into an approximately 10-25 mm thick, approximately 16 cm diameter crust and par-baking at about 425°F for about 5 minutes, has a total moisture loss of less than 12 wt%.

20. The bread dough of any one of Claims 16 to 19, wherein the dough after forming into an approximately 10-25 mm thick, approximately 16 cm diameter crust and baking at about 400°F for about 30 minutes, has a peak penetration force at 5 mm of less than about 260g as measured by a TA.XT2 Texture analyzer.

21. The bread dough of any one of Claims 16 to 20, wherein the dough is chilled in a manner selected from the group consisting of refrigerated and frozen.

22. The bread dough of any one of Claims 16 to 21, wherein the crystalline polysaccharide is derived from a starch having an amylose content of at least about 60% by weight.

23. The bread dough of any one of Claims 16 to 22, wherein the crystalline polysaccharide is derived from a starch having an amylose content of about 65% to 75% by weight.

24. A food product that can be baked in an oven to provide a soft baked texture, comprising the bread dough of any one of Claims 16 to 23, and an optional dough topping or filling, a package containing the dough and optional dough topping or filling.

25. A method of making a frozen pizza that can be baked in an oven to provide a pizza having a soft bready interior and a browned crust with a crispy exterior, comprising providing a dough comprising the bread dough of any one of Claims 16 to 24, forming the dough into a pizza crust, optionally par-baking the pizza crust, chilling the pizza crust, adding toppings to chilled pizza crust to provide a topped pizza crust, and packaging the topped pizza crust.

26. A method of making a high moisture, high fiber baked product having a soft baked texture, comprising:
a) providing a high moisture dough comprising a leavened mixture comprising a major proportion of flour, at least about 20 wt% water, and at least about 1 wt% of a crystalline polysaccharide, the percentages based on flour content;
b) optionally topping or filling the dough;
c) baking the dough, wherein the dough after baking results in increased total dietary fiber content retention and reduced firmness as determined by penetration and/or compression force, as compared to a similar baked dough lacking the crystalline polysaccharide.
